# EUROPEAN PATENT APPLICATION

(11) **EP 3 085 806 A1**
(43) Date of publication of application: **26.10.2016**
(21) Application number: 16155126.2
(22) Date of filing: 10.02.2016
(51) Int. Cl.: C23C 4/02, B23K 35/00, C23C 4/10, C23C 4/18, C23C 28/04, C04B 41/52

(54) **METHOD OF PRODUCING A COATED SUBSTRATE**

(30) Priority: 20.04.2015 US 201514690835
(71) Applicant: Honeywell International Inc., Morris Plains, NJ 07950 (US)
(72) Inventor: OLSON, Don, Morris Plains, NJ New Jersey 07950 (US); OBOODI, Reza, Morris Plains, NJ New Jersey 07950 (US); KRUK, Natalie, Morris Plains, NJ New Jersey 07950 (US); TUCKER, Bradley Reed, Morris Plains, NJ New Jersey 07950 (US)
(74) Representative: Houghton, Mark Phillip

(57) **Abstract**

Coated substrates and methods of producing the same are provided. In an exemplary embodiment, a method of coating a substrate includes brazing a first bond coat layer to the substrate, where the substrate includes a ceramic material. A second bond coat layer is plasma sprayed overlying the first bond coat layer to form a composite bond coat with the first bond coat layer positioned between the second bond coat layer and the substrate. An environmental barrier coating layer is applied overlying the second bond coat layer such that the first and second bond coat layers are positioned between the substrate and the environmental barrier coating layer.

## Description

This embodiment was made with Government support under contract W911W6-08-2-0001 awarded by the U.S. Army Aviation Applied Technology Directorate. The Government has certain rights in this embodiment.

### TECHNICAL FIELD

The present disclosure generally relates to coated substrates and methods of producing the same, and more particularly relates to ceramic substrates with protective coatings and methods of producing the same.

### BACKGROUND

Ceramic components present numerous benefits over metallic components in the high pressure module of gas turbine engines. For example, ceramics are higher temperature-capable than many nickel-based metallic components. Ceramics also possess relatively high strength at low weights as compared to conventional superalloys. The relative thermochemical and thermomechanical stability of certain ceramics at high temperatures can reduce or eliminate the need for cooling systems that may be required for comparable nickel-based superalloys, therefore, the use of ceramic components can reduce weight, improve efficiency, and reduce the complexity of turbine engines. As can be imagined, the advantageous properties of ceramic components make them attractive options for many uses other than the hot sections of turbine engines.

The hot sections of turbine engines are challenging environments that can degrade ceramic or metallic components over time. These hot sections, especially the high pressure turbine section, can include high temperatures, rapid temperature changes, engine vibration, erosion, corrosion from fuel additives and salts, oxidation, etc. An environmental barrier coating (EBC) system may be applied to a ceramic component to provide some protection from the harsh gas turbine engine conditions. The EBC may be specifically designed for the environment the component will be exposed to. In most cases, a ceramic component has a multilayer EBC system where each layer serves a different function. For example, a thermal protective layer may be added near the top of the multilayer system to provide thermal protection to the underlying layers and the substrate in cases of very high gas path temperatures, or large thermal gradients. In another example, an abrasive protective coating layer may be applied as a top layer for anticipated rub conditions. Other layers may primarily serve as oxidation/corrosion protection for the substrate.

In many cases, the EBC does not readily adhere to the ceramic substrate of the component. In such cases, the EBC may spall off during use. When spallation occurs, the protection afforded the substrate by the EBC is lost and the underlying ceramic component is exposed to the engine environment. This can shorten the service life of the component, and can increase the risk of failure during service. A bond coat layer may be applied between the EBC and the substrate to adhere the EBC to the substrate and therefore minimize the risk of spallation. However, the harsh conditions within the hot sections of turbine engines can detrimentally impact the service life of a bond coat, and a failing bond coat can result in spallation of the EBC.

Accordingly, it is desirable to provide bond coats and methods of forming bond coats that provide strong adhesion in adverse conditions. In addition, it is desirable to provide bond coats and methods of forming bond coats for ceramic substrates. Furthermore, other desirable features and characteristics of the present embodiment will become apparent from the subsequent detailed description and the appended claims, taken in conjunction with the accompanying drawings and this background of the invention.

### BRIEF SUMMARY

Coated substrates and methods of producing the same are provided. In an exemplary embodiment, a method of coating a substrate includes brazing a first bond coat layer to the substrate, where the substrate includes a ceramic material. A second bond coat layer is plasma sprayed overlying the first bond coat layer to form a composite bond coat with the first bond coat layer positioned between the second bond coat layer and the substrate. An environmental barrier coating layer is applied overlying the second bond coat layer such that the first and second bond coat layers are positioned between the substrate and the environmental barrier coating layer.

A method for coating a substrate is provided in another embodiment. The method includes forming a composite bond coat overlying the substrate, where the substrate includes a ceramic material. The composite bond coat includes a first bond coat layer having a first surface roughness Rₐ₁, and a second bond coat layer having a second surface roughness Rₐ₂ greater than the first surface roughness R_{a1.} The surface roughness measured in Rₐ is an arithmetic average of an absolute value of vertical deviations from a mean line. An environmental barrier coating layer is applied to the composite bond coat such that the composite bond coat is positioned between the substrate and the environmental barrier coating layer.

A substrate is provided in yet another embodiment. A first bond coat layer overlies the substrate, where the substrate includes a silicon based ceramic material. The first bond coat layer includes from about 60 to about 95 mole percent silicon, and from about 5 to about 40 mole percent of a first additional material. The first additional material includes one or more of a metal and a silicide. The first bond coat layer has a first surface roughness. A second bond coat layer overlies the first bond coat layer such that the first bond coat layer is positioned between the substrate and the second bond coat layer. The second bond coat layer includes from about 60 to about 100 mole percent silicon, and has a second surface roughness greater than the first surface roughness. An environmental barrier coating layer overlies the second bond coat layer such that the first and second bond coat layers are positioned between the substrate and the environmental barrier coating layer.

### BRIEF DESCRIPTION OF THE DRAWINGS

The present embodiments will hereinafter be described in conjunction with the following drawing figures, wherein like numerals denote like elements, and wherein:
FIG. 1 schematically illustrates a first bond coat layer on a substrate and a method of forming the same; and
FIG. 2 schematically illustrates a second bond coat layer and an environmental barrier coating layer overlying the first bond coat layer, and a method of forming the same.

### DETAILED DESCRIPTION

The following detailed description is merely exemplary in nature and is not intended to limit the various embodiments or the application and uses of the invention. Furthermore, there is no intention to be bound by any expressed or implied theory presented in the preceding technical field, background, brief summary, or the following detailed description.

Bond coats are used to adhere an environmental barrier coating layer to a ceramic substrate. Adhesion is improved by greater surface roughness in many embodiments, so a bond coat with greater surface roughness may improve adhesion. Plasma sprayed bond coats often have a higher surface roughness than brazed bond coats, but the use of a brazed bond coat layer between a plasma sprayed bond coat layer and the ceramic substrate can improve the adhesion of the plasma sprayed layer to the substrate.

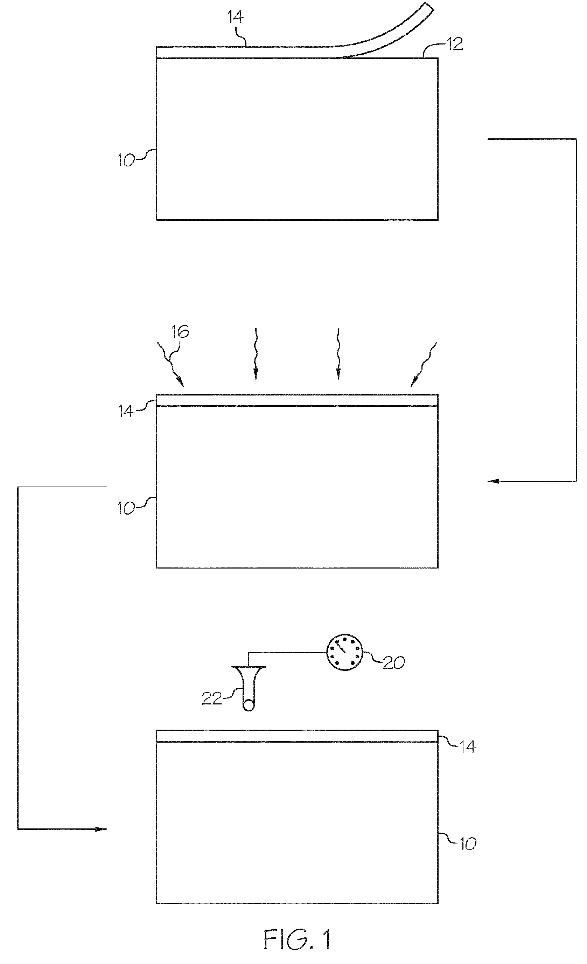

Referring to an exemplary embodiment illustrated in FIG. 1, a component includes a substrate **10.** The substrate **10** includes a monolithic ceramic or a ceramic matrix composite with a substrate surface **12.** A ceramic is an inorganic solid that may include metals, non-metals, or metalloid atoms primarily held together with ionic and/or covalent bonds. Ceramics may be crystalline, semi-crystalline, partially crystalline, or amorphous. The substrate **10** may include ceramic material throughout the component, such that the component is essentially 100 percent substrate **10,** or the substrate **10** may be a coating or layer over other materials within the component, such as a ceramic coating over a metallic core.

In an exemplary embodiment, the substrate **10** includes a silicon based ceramic material, including but not limited to silicon nitride, silicon carbide, silicon oxynitride, SiAlON materials (materials that include silicon, aluminum, oxygen, and nitrogen), and silicon dioxide. In some embodiments, all of the ceramic material of the substrate **10** is a silicon based ceramic, but in other embodiments the substrate **10** may include silicon based ceramics combined with other ceramic materials that do not include silicon. In various embodiments, the silicon based ceramic portion of the substrate **10** may be from about 50 to about 100 weight percent, or from about 80 to about 100 weight percent, or from about 99 to about 100 weight percent of the entire substrate **10.**

A first bond coat layer **14** is brazed to the substrate **10** on the substrate surface **12.** As used herein, the term "braze" means bringing a material to it liquidus point such that the material flows, then solidifying the material, so the first bond coat layer **14** is brought to its liquidus point and then solidified onto the substrate **10** in the brazing process. The first bond coat layer **14** may be positioned on the substrate surface **12** before brazing, such as with a tape (as illustrated in FIG. 1), but other application methods are used in alternate embodiments. For example, the first bond coat layer **14** may be applied with a brush, by dipping, by spraying, or by other methods that will deposit the material of the first bond coat layer **14** on the substrate **10.** The first bond coat layer **14** should be compatible with the substrate **10** such that the first bond coat layer **14** will adhere to the substrate **10.** The first bond coat layer **14** may have a thickness (after brazing) of from about 0.5 to about 20 mils, or of from about 1 to about 20 mils, or from about 1 to about 5 mils in various embodiments. The first bond coat layer **14** is in direct contact with the substrate **10** in many embodiments.

The coefficient of thermal expansion (CTE) of the first bond coat layer **14** may be close to the CTE of the substrate **10** in embodiments where the substrate will experience temperature extremes during use, because similar CTE's for the first bond coat layer **14** and the substrate **10** can reduce spalling do to the first bond coat layer **14** expanding or contracting at a different rate than the substrate **10** with temperature changes. In an exemplary embodiment, the CTE of the first bond coat layer **14** is within about 5 percent of the CTE of the substrate **10,** or within about 3 percent, or within about 1 percent in alternate embodiments. The percent difference in the CTE is determined by finding the absolute value of the difference between the first bond coat layer CTE and the substrate CTE, and dividing that absolute value by the CTE of the substrate **10.**

In embodiments where the substrate **10** includes silicon based ceramics, the first bond coat layer **14** may also include silicon to improve compatibility. In an exemplary embodiment, the first bond coat layer **14** includes from about 60 mole percent to about 95 mole percent silicon, or from about 70 mole percent to about 90 mole percent silicon, or from about 80 mole percent to about 90 mole percent silicon in alternate embodiments. The first bond coat layer **14** also includes a first additional material. The first additional material is from about 5 to about 40 mole percent, or from about 10 to about 30 mole percent, or from about 10 to about 20 mole percent of the first bond coat layer **14** in various embodiments. The first additional material may be one or more of a metal and a silicide, and the first additional material and the silicon of the first bond coat layer **14** may be at the eutectic point such that all components melt at the same temperature. References herein to a material being "at" the eutectic point means the material composition is within about 2 percent of the eutectic point, so if a the eutectic point were at 50 percent of component A and 50 percent of component B, combinations ranging from 48 to 52 percent of each component would be considered "at" the eutectic point. Combinations at the eutectic point may facilitate brazing due to simultaneous melting, but combinations at the eutectic point are not required and in some embodiments the first additional material and the silicon are combined at concentrations other than at the eutectic point (hyper- or hypoeutectic.) The first additional material may include several different metals and/or silicides, but in an exemplary embodiment the first additional material is selected from the group consisting of a transition metal silicide, or combinations transition metal silicides. Transition metals include elements in the d-block of the periodic table, as well as elements in the f-block of the periodic table.

The first bond coat layer **14** is brazed to the substrate **10** by heating. In an exemplary embodiment, the first bond coat layer **14** has a melting point of from about 1,300 degrees centigrade (°C) to about 1,400 °C. The brazing process includes melting or softening the first bond coat layer **14** by applying heat **16** at a temperature of from about 1,300 °C to about 1,400 °C, such as in a furnace or other heating device. The substrate **10** and the first bond coat layer **14** may be positioned in an atmosphere that is free of oxidizing agents during the brazing process. As used herein, an atmosphere is "free of oxidizing agents" if oxidizing agents are present at a partial pressure of about 0.0001 atmospheres or less. Oxidizing agents include, but are not limited to, oxygen, carbon monoxide, and water. During the brazing process, the substrate **10** and first bond coat layer **14** may be heated in a vacuum, or in the presence of an inert gas such as helium, argon, or nitrogen.

After brazing, the first bond coat layer **14** has a first surface roughness **20** that can be measured. In an exemplary embodiment, the first surface roughness **20** and other surface roughnesses described below are determined by the arithmetic average of the absolute value of vertical deviations from a mean line, where the mean line is the average surface level. In an exemplary embodiment, the first surface roughness Rₐ₁ **20** is measured as a roughness parameter Rₐ₁. The surface roughness can be measured with a profilometer **22** or with other surface roughness measuring devices. In general, increasing the surface roughness improves adhesion. In some embodiments, the surface roughness of the first bond coat layer **14** after brazing is relatively smooth, so a rougher surface could improve adhesion for subsequent layers.

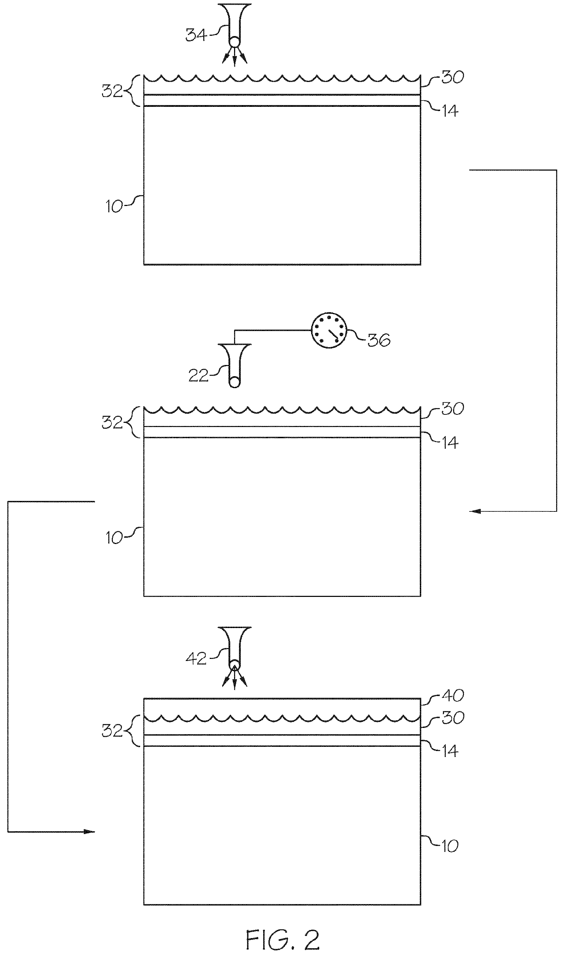

Referring to the exemplary embodiment in FIG. 2, with continuing reference to FIG. 1, a second bond coat layer **30** is plasma sprayed to the first bond coat layer **14** to form a composite bond coat **32.** The second bond coat layer **30** overlies the first bond coat layer **14** in the composite bond coat **32,** so the first bond coat layer **14** is between the substrate **10** and the second bond coat layer **30.** As used herein, the term "overlying" means "over" such that an intervening layer may lay between the second bond coat layer **30** and the first bond coat layer **14,** and "on" such the second bond coat layer **30** physically contacts the first bond coat layer **14.** In some embodiments, the second bond coat layer **30** directly contacts the first bond coat layer **14.** The second bond coat layer **30** may be plasma sprayed with a second bond coat layer plasma spray device **34,** where the substrate **10** and the first bond coat layer **14** are maintained at a temperature below the melting point of the first bond coat layer **14** and below the melting point of the second bond coat layer **30.** In an exemplary embodiment, the material of the second bond coat layer **30** is melted and propelled toward the first bond coat layer **14** by the second bond coat layer plasma spray device **34.** The material of the second bond coat layer **30** may be heated to several thousand degrees centigrade in a plasma torch and/or a plasma jet, and propelled as small droplets that may be a few micrometers in size. The substrate **10** and first bond coat layer **14** are kept well below the melting point of the material of the second bond coat layer **30,** so the small droplets rapidly solidify on contact with the first bond coat layer **14.** The small droplets may flatten when impacting the first bond coat layer **14.**

The operating conditions of the second bond coat layer plasma spray device **34** can be modified to adjust some properties of the second bond coat layer **30.** For example, if the small droplets are heated to higher temperature, the viscosity increases and the second bond coat layer **30** may be smoother than for small droplets at a lower temperature. In a similar manner, a smoother surface may be obtained by propelling the small droplets more rapidly so the small droplets flatten more on impact. In an exemplary embodiment, the second bond coat layer **30** is formed such that it has a second surface roughness **36** that is greater than the first surface roughness **20.** For example, the second surface roughness **36** may be measured as a roughness parameter Rₐ₂, as described above, where Rₐ₂ is greater than the first surface roughness Rₐ₁ **20.** The second surface roughness Rₐ₂ **36** may be about two or more times the first surface roughness Rₐ₁ **20,** or about 4 or more times the first surface roughness Rₐ₁ **20,** or about 5 or more times the first surface roughness Rₐ₁ **20** in various embodiments. The higher roughness value for the second bond coat layer **30** may improve adhesion for additional layers formed overlying the composite bond coat **32.** The second surface roughness **36** may be measured with a profilometer **22** or other measuring device, as described above. The second bond coat layer **30** may also be applied at appropriate conditions to produce a desired thickness, such ass from about 0.5 to about 20 mils thick, or from about 1 to about 10 mils thick, or from about 1 to about 5 mils thick in various embodiments.

The second bond coat layer **30** is compatible with the first bond coat layer **14** and the substrate **10,** and may have a CTE within about 5 percent of the CTE of the substrate **10,** or within about 3 percent, or within about 1 percent in alternate embodiments, as described above. In embodiments where the substrate **10** includes a silicon based ceramic, the second bond coat layer **30** may also include silicon, which may improve compatibility. In an exemplary embodiment, the second bond coat layer **30** includes from about 60 to about 100 mole percent silicon, so the second bond coat layer **30** may be essentially pure silicon in some embodiments. In alternate embodiments, the second bond coat layer **30** may include about 70 to about 100 mole percent silicon, or about 80 to 100 mole percent silicon. The second bond coat layer **30** may also include other components in some embodiments, such as a second additional material. The second bond coat layer **30** may optionally include a second additional material at from about 0 to about 40 mole percent, or from about 0 to about 30 mole percent, or from about 0 to about 20 mole percent in various embodiments. The second additional material may be one or more of a metal and a silicide, and the second additional material and the silicon of the second bond coat layer **30** may optionally be at the eutectic point, as described above. The second additional material may include several different metals and/or silicides, but in an exemplary embodiment the second additional material is selected from the group consisting of a transition metal silicide, or combinations transition metal silicides, as described above for the first bond coat layer **14.**

An environmental barrier coating layer **40,** referred to by the abbreviation EBC, is applied overlying the second bond coat layer **30.** The EBC **40** is adhered to the substrate **10** by the composite bond coat **32.** The EBC **40** may include a wide variety of materials in various embodiments, and the EBC **40** may be customized for specific environments that the substrate **10** will be exposed to. The EBC **40** may include 1 or more layers, and in embodiments with more than 1 layer the different layers may or may not have different compositions. For example, the EBC **40** may include an oxide ceramic, such as various silicates or other ceramics that may or may not include the silicon element. The EBC **40** may be applied as a plasma spray using an EBC plasma spray device **42,** as illustrated, but the EBC **40** may be applied in a wide variety of other manners including but not limited to tape, paint, other spray techniques, dips, brazing, etc. The EBC **40** may optionally be heat treated after application, but the optional heat treatment process for the EBC **40** typically does not involve temperatures at or above the melting point of the first bond coat layer **14.** The composite bond coat **32** may improve bonding of the EBC **40** to the ceramic substrate **10** compared to a bond coat that does not include a brazed layer and a plasma sprayed layer. The first bond coat layer **14** provides secure adhesion to the substrate **10,** and the second bond coat layer **30** provides a rough surface to improve adhesion of the EBC **40.**

While at least one embodiment has been presented in the foregoing detailed description of the invention, it should be appreciated that a vast number of variations exist. It should also be appreciated that the embodiment or embodiments are only examples, and are not intended to limit the scope, applicability, or configuration of the invention in any way. Rather, the foregoing detailed description will provide those skilled in the art with a convenient road map for implementing an embodiment of the invention, it being understood that various changes may be made in the function and arrangement of elements described without departing from the scope as set forth in the appended claims and their legal equivalents.

## Claims

1. A method of coating a substrate (10) comprising:
brazing a first bond coat layer (14) to the substrate (10), wherein the substrate (10) comprises a ceramic material;
plasma spraying a second bond coat layer (30) overlying the first bond coat layer (14) to form a composite bond coat (32), wherein the first bond coat layer (14) is positioned between the second bond coat layer (30) and the substrate (10); and
applying an environmental barrier coating layer overlying the second bond coat layer (30) such that the first bond coat layer (14) and the second bond coat layer (30) are positioned between the substrate (10) and the environmental barrier coating layer.

2. The method of claim 1 wherein brazing the first bond coat layer (14) comprises brazing the first bond coat layer (14) to the substrate (10) wherein the substrate (10) comprises a silicon based monolithic ceramic or ceramic matrix composite.

3. The method of claim 1 wherein brazing the first bond coat layer (14) comprises brazing the first bond coat layer (14) to the substrate (10) wherein the substrate (10) comprises silicon nitride.

4. The method of claim 1 wherein brazing the first bond coat layer (14) to the substrate (10) comprises brazing the first bond coat layer (14) wherein the first bond coat layer (14) comprises from about 5 mole percent to about 40 mole percent of a first additional material, wherein the first additional material comprises one or more of a metal and a silicide.

5. The method of claim 1 wherein brazing the first bond coat layer (14) to the substrate (10) comprises brazing the first bond coat layer (14) wherein the first bond coat layer (14) comprises from about 5 mole percent to about 40 mole percent of a first additional material selected from the group consisting of a transition metal silicide and combinations of transition metal silicides.

6. The method of claim 1 wherein brazing the first bond coat layer (14) comprises brazing the first bond coat layer (14) to the substrate (10) wherein the first bond coat layer (14) comprises silicon from about 60 mole percent to about 95 mole percent.

7. The method of claim 1 wherein brazing the first bond coat layer (14) comprises brazing the first bond coat layer (14) wherein the first bond coat layer (14) comprises silicon and a first additional material at a eutectic point.

8. The method of claim 1 wherein brazing the first bond coat layer (14) comprises heating the first bond coat layer (14) and the substrate (10) at a temperature of from about 1,300 degrees centigrade to about 1,400 degrees centigrade.

9. The method of claim 1 wherein brazing the first bond coat layer (14) comprises heating the first bond coat layer (14) in a brazing atmosphere free of an oxidizing agent.

10. The method of claim 1 wherein plasma spraying the second bond coat layer (30) comprises plasma spraying the second bond coat layer (30) overlying the first bond coat layer (14) wherein the second bond coat layer (30) comprises from about 60 to about 100 mole percent silicon.

11. The method of claim 1 wherein plasma spraying the second bond coat layer (30) comprises plasma spraying the second bond coat layer (30) wherein the second bond coat layer (30) comprises from about 0 to about 40 mole percent of a second additional material, wherein the second additional material is selected from the group consisting of a transition metal silicide and combinations of transition metal silicides.

12. The method of claim 1 wherein plasma spraying the second bond coat layer (30) comprises plasma spraying the second bond coat layer (30) such that the second bond coat layer (30) directly contacts the first bond coat layer (14).

13. The method of claim 1 wherein applying the environmental barrier coating layer comprises applying the environmental barrier coating layer wherein the environmental barrier coating layer comprises an oxide ceramic.
